# EUROPÄISCHE PATENTSCHRIFT

(11) **EP 0 754 848 B1**
(45) Veröffentlichungstag und Bekanntmachung des Hinweises auf die Patenterteilung: **24.11.1999**
(21) Anmeldenummer: 96111532.6
(22) Anmeldetag: 17.07.1996
(51) Int. Cl.: F02F 1/42

(54) **Brennkraftmaschine mit innerer Gemischbildung**
Combustion engine with internal forming of a mixture
Moteur à combustion avec la formation d'un mélange interne

(30) Priorität: 20.07.1995 DE 19526506
(43) Veröffentlichungstag der Anmeldung: 22.01.1997
(73) Patentinhaber: Bayerische Motoren Werke Aktiengesellschaft, 80788 München (DE); Tippelmann, Götz, D-74196 Neuenstadt (DE)
(72) Erfinder: Eichlseder, Helmut, Dr., 4400 Steyr (AT); Staub, Peter, 4540 Bad Hall (AT); Tippelmann, Götz, Dipl.-Ing., 74196 Neuenstadt (DE)

(56) Entgegenhaltungen:
- EP-A- 0 173 296
- DE-A- 1 957 461
- DE-A- 3 619 550
- GB-A- 899 760
- US-A- 4 703 729

## Beschreibung

Die Erfindung geht gemäß dem Oberbegriff des Patentanspruches 1 von der DE 36 19 550 A1 aus.

Weiter ist aus der GB-PS 844 352 ein vorzugsweise für eine Diesel-Brennkraftmaschine verwendbarer Zylinderkopf bekannt, der je Zylinder zwei auf einer Seite der Maschinenlängsebene angeordnete, ventilgesteuerte Einlaßöffnungen aufweist, die mit den Ventilen in einer zur Maschinenlängsebene parallelen Ebene angeordnet sind. Die Einlaßöffnungen stehen mit im Zylinderkopf gesondert ausgebildeten, drallerzeugenden Kanälen in Verbindung, wobei je Zylinder ein Tangentialkanal bzw. Schrägkanal und ein die von diesem initiierte rotierende Zylinderladung mit seinem Drall unterstützender Spiralkanal vorgesehen ist.

Für das Gießen des bekannten Zylinderkopfes mit zur Maschinenlängsebene räumlich schräg ansteigend angeordneten Einzelkanälen bringt das Erfordernis gesonderter Kanal-Gießkerne für den, bezogen auf die rotierende Zylinderladung vorderen Tangentialkanal und den entsprechend hinteren Spiralkanal den Nachteil, daß bei einem von der vorbestimmten räumlichen Zuordnung dieser Kanäle abweichenden Gießergebnis keine für die Gemischbildung optimale Drallausbildung erreicht ist. Da eine mechanische Nachbearbeitung in der Regel ausscheidet, ergibt sich ein relativ hoher Ausschuß an Zylinderköpfen.

Dieser durch gesonderte Kanal-Gießkerne verursachte Nachteil ist zwar mit einer aus der GB-PS 837 085 bekannten Kanalausbildung in einem Zylinderkopf für eine Diesel-Brennkraftmaschine vermeidbar, bei der je Zylinder ein Tangentialkanal und ein Füllkanal zu auf einer Seite der Maschinenlängsebene angeordneten, ventilgesteuerten Einlaßöffnungen stromauf einen gemeinsamen Einlaßkanal bilden. Jedoch weist diese bekannte Kanalausbildung durch den im Verhältnis zum Füllkanal relativ langen, wesentlich drallbestimmenden Tangentialkanal einen zur Maschinenlängsebene derart schräg gerichteten Verlauf des gemeinsamen Einlaßkanales auf, daß insbesondere bei geringen Zylinderabständen einer Brennkraftmaschine eine gleichmäßige Anordnung von Zylinderkopfschrauben nachteiligerweise Weise nicht möglich ist.

Weiter nachteilig bei den Gegenständen beider vorgenannter britischer Patentschriften ist, daß sowohl die Einlaßmündungen der voneinander getrennten Kanäle als auch die Einlaßmündung des gemeinsamen Einlaßkanals jeweils an der Oberseite eines Zylinderkopfes in einem seitlich relativ weit abstehenden Abschnitt vorgesehen sind. Hierbei ist vor allem der Umstand breit bauender Zylinderköpfe nachteilig hervorzuheben.

Ein schmal bauender Zylinderkopf mit seitlich angeordneten Einlaßmündungen zweier gesonderter Spiralkanäle zu Einlaßöffnungen für einen Zylinder einer Diesel-Brennkraftmaschine ist aus der DE-B 1 928 464 bekannt. Die auf einer Seite der Maschinenlängsebene angeordneten Einlaßöffnungen mit zur Maschinenlängsebene parallel und in gleichen Abständen ausgerüsteten Einlaßventilen stehen mit im Zylinder einen gleichgerichteten Drall bewirkenden Spiralkanälen in Verbindung. Deren räumlich kompakte Anordnung kommt zwar einer günstigen Anordnung von Zylinderkopfschrauben entgegen, jedoch ergeben deren dreiecksförmige Kanalquerschnitte relativ zu diesen lange Umfangsflächen mit nicht unerheblichen Strömungsverlusten.

Wie schließlich anhand des Gegenstandes der DE-A 40 11 292 ersichtlich, ist zur Erzielung eines relativ strömungsgünstigen, seitlich im Zylinderkopf einer Diesel-Brennkraftmaschine mündenden Einlaßkanals zur Versorgung zweier Drallkanäle zu Einlaßöffnungen eines Brennraumes eine Anordnung mit beiderseits der Maschinenlängsebene vorgesehenen Einlaßöffnungen erforderlich. Wie in diesem Dokument angedeutet, ist damit ein aufwendiger Antrieb der die Einlaßöffnungen steuernden Ventile gegeben.

Schließlich erfordert die gattungsgemäße Kanalanordnung zur Gleichverteilung der Ladungsströmung auf die beiden Drall Kanäle zusätzliche Maßnahmen von erheblichem Aufwand.

Der Erfindung liegt die Aufgabe zugrunde, für eine gattungsgemäße Brennkraftmaschine eine Kanalgestaltung im Zylinderkopf aufzuzeigen, die bei strömungsund dralloptimierter Ausbildung und Anordnung einen einfachen Ventiltrieb sowie eine relativ freie Wahl für eine günstige Anordnung von Zylinderkopfschrauben ermöglicht ohne zusätzliche gießtechnische Aufwendungen für ein hohes und bei Mehrzylinder-Brennkraftmaschinen vergleichmäßigtes Drallniveau.

Diese Aufgabe ist mit dem Patentanspruch 1 gelöst.

Der Vorteil der Erfindung ist ein für beide Drallkanäle gemeinsamer Einlaßkanal von erheblicher, die Strömung begünstigender Länge in einem Zylinderkopf üblicher Baubreite, wobei die Länge einerseits mittels einer von der Zylindermittenebene erheblich beabstandeten Einlaßmündung an einer Außenseite des Zylinderkopfes und andererseits durch eine erst im Bereich zwischen den ventilgesteuerten Einlaßöffnungen vorgesehene Gabelung zur endgültigen Trennung in als eigenständige Teilkanäle gestaltete Drallkanäle erzielt ist.

Diese Anordnung eröffnet unter Beachtung der jeweiligen Höhenlage der Gabelung sowie der Einlaßmündung des Einlaßkanals über dem Zylinderkopfboden in vorteilhafter Weise zur Steigerung der Länge einen räumlichen Verlauf des Einlaßkanals. Mit dem weiteren erfindungsgemäßen Merkmal eines zur Maschinenlängsebene räumlich oder eben schräg verlaufenden Einlaßkanal-Abschnittes, in dem mit der Ladungs-Hauptströmung eine Mittellinie festgelegt ist, die zumindest im einlaßmündungsseitigen Anfangsbereich mit der Kanalachse des Tangentialkanals parallel verläuft, ist eine den vorzugsweise unterschiedlichen Drallkanälen funktionsgerechte Ladungsaufteilung sichergestellt.

Mit dem weiteren Gestaltungsmerkmal der durch die Steigung der Spirale des hinteren Spiralkanals festlegbaren Höhenlage der Gabelung über dem Zylinderkopfboden bzw. dessen Dichtfläche ist einerseits die Ausgestaltung eines für eine optimale Drallausbildung einen Vollquerschnitt aufweisenden Tangentialkanals sichergestellt und zum anderen ein Spiralwinkel für den als hinteren Drallkanal vorgesehenen Spiralkanal erreicht, wodurch eine den Drall des ersten, vorderen Drallkanal bildenden Tangentialkanals vorteilhaft unterstützende, insbesondere verstärkende Ausströmung aus dem Spiralkanal erzielt ist.

In einer bevorzugten Ausgestaltung der Erfindung ist der erste, vordere Drallkanal bevorzugt als ein unter einem Winkel von 30 bis 50° zum Zylinderkopfboden schräg ansteigender Tangentialkanal gestaltet. Dieser - in Draufsicht gesehen - vorzugsweise gerade und mit seiner Kanalachse im wesentlichen parallel zur Mittellinie des Einlaßkanal-Abschnittes verlaufend angeordnete Tangentialkanal und der Spiral-kanal schließen in weiterer Ausgestaltung für eine vorteilhaft angepaßte Ladungsaufteilung nahe der Gabelung jeweils mit einem rundovalen Querschnitt an den Einlaßkanal-Abschnitt an, wobei das Rundoval des Tangentialkanals mit seiner Hauptachse quer gerichtet ist zu dem mit seiner Hauptachse im wesentlichen vertikal gerichteten Rundoval des Spiralkanals.

Die Ausgestaltung des Spiralkanals mit einem Querschnitt eines vertikal gerichteten Rundovals unterstützt in vorteilhafter Weise die Anordnung der Gabelung der beiden Teil- bzw. Drallkanäle im Bereich zwischen den Einlaßöffnungen zum Brennraum und dient damit der Erzielung eines langen Einlaßkanals.

Weiter hat die vorbeschriebene, erfindungsgemäße Zuordnung der Rundovale mit kanalartbezogen unterschiedlich großen Querschnitten für Spiralkanal und Tangentialkanal eine vorteilhafte Auswirkung auf die Gestaltung und Zuordnung der im Einlaßkanal-Abschnitt auf die Rundovale aufgefächert zulaufend angeordneten Teilkanäle. Die vorzugsweise im Anfangsbereich stromab der Einlaßmündung nach einem weiteren Erfindungsmerkmal im Einlaßkanal-Abschnitt einsetzende Auffächerung in die Teil- bzw. Drallkanäle ergibt in vorteilhafter Weise für den mit dem Spiralkanal verbundenen Fächerkanal eine bei mäßiger Verringerung der Kanalhöhe erzielbare Querschnittsreduzierung bis zum Rundoval dadurch, daß die tangentialkanalseitige Seitenbegrenzung relativ zur gegenüberliegenden Seitenbegrenzung stark schräg verlaufend ausgebildet ist.

Diese Anordnung wird nach einem weiteren Vorschlag zur Gestaltung des Fächerkanals zum Tangentialkanal vorteilhaft dadurch unterstützt, daß dieser Fächerkanal wesentlich in dieser tangentialkanalseitigen Seitenbegrenzung als eine auswärts gerichtete, kanalbodennahe Ausbuchtung gestaltet ist. Diese vorzugsweise rinnenartig gestaltete und in ihrem Teilquerschnitt dem quer zur Zylinderachse gerichteten Rundoval des Tangentialkanals angepaßte Ausbuchtung verläuft infolge der kanalbodennahen Anordnung in einem unteren Teil der im Bereich des vertikalen Rundovals des Spiralkanales an die äußere Spiralwandung anschließenden tangentialkanalseitigen bzw. vorderen Seitenbegrenzung. Somit liegt das im Querschnitt kleinere, quer gerichtete Rundoval des Tangentialkanals im unteren Bereich des aus Gründen höherer Strömungswiderstände der Spirale größer gewählten Querschnittes des vertikal gerichteten Rundovals des Spiralkanals. Da zudem erfindungsgemäß der Tangentialkanal im Bereich seines Rundoval-Querschnittes eine zur Mittellinie des Einlaßkanal-Abschnittes parallele Kanalachse aufweist und die vorgenannte Mittellinie in ihrer Verlängerung die äußere Spiralwandung stromab der anschließenden tangentialkanalseitigen bzw. vorderen Seitenbegrenzung schneidet, ist jedem der Drallkanäle aufgrund der erfindungsgemäß gerichteten Strömung in Verbindung mit der bevorzugt gewählten gegenseitigen Lage der Rundoval-Querschnitte beider Teil- bzw. Drallkanäle eine maximale Ladung zugeführt, die auch einer optimalen Drallbildung förderlich ist.

Zur weiteren Ausgestaltung des für beide Drallkanäle gemeinsamen Einlaßkanals in seinem räumlichen Verlauf zu in einer Zylinderkopf-Querebene zweckmäßig gewählt angeordneten Zylinderkopfschrauben wird ferner vorgeschlagen, daß der - in Draufsicht gesehen - schräg zur Maschinenlängsebene angeordnete Einlaßkanal-Abschnitt zusätzlich in Richtung der Einlaßmündung ansteigend gestaltet ist und weiter stromauf über einen anschließenden Krümmungsabschnitt mit einer am Zylinderkopf, vorzugsweise in einem kurzen Anschlußstutzen, seitwärts nach oben gerichteten Einlaßmündung im Bereich der die Zylinderkopfschrauben enthaltenden Zylinderkopf-Querebene in Verbindung steht. Mit diesem räumlichen Verlauf des Einlaßkanals zu einer von der Zylindermittenebene erheblich beabstandeten Einlaßmündung ist einerseits eine vorteilhaft große Kanallänge erreicht und andererseits im Bereich der Zylindermittenebene unterhalb des Einlaßkanals im Zylinderkopf ein leicht zugänglicher Einbauraum geschaffen.

Dieser relativ hohe Einbauraum kann vorteilhaft nach einem zusätzlichen Merkmal für die Anordnung einer den Einlaßkanal unterquerenden Glühvorrichtung dienen mit einer zwischen den Einlaßöffnungen der Drallkanäle einer Einspritzdüse benachbart angeordneten Glühkerze.

Weiter läßt die Erfindung ohne Drallverlust eine Anordnung der Einlaßöffnungen mit ihren Mitten in einem zur Maschinenlängsebene gleichen, parallelen Abstand zu, so daß deren Hubventile mittels einer gemeinsamen Steuerwelle betätigbar sind.

Zur Änderung des Drallniveaus kann erfindungsgemäß im Einlaßkanal eine verstellbare Klappe vorgesehen sein, wie eine solche per se aus der bereits erwähnten DE-A 40 11 292 bekannt ist.

Der erfindungsgemäß räumlich verlaufend gestaltete und einenends in kurzen, gesonderten Drallkanälen endende Einlaßkanal ergibt einen einerseits über die relativ breite Basis der Drallkanäle und andererseits über eine relativ großflächige, vorzugsweise rechteckige Einlaßmündung sicher abzustützenden Kanal-Gießkern, wodurch bei einem Zylinderkopf für eine mehrzylindrige Brennkraftmaschine gegenseitige Lageabweichungen der Kanal-Gießkerne mit dem Nachteil von Drallstreuungen in den Zylindern klein gehalten sind. Da relative Lageabweichungen der Drallkanäle für einen Zylinder jeweils durch den einzigen Kanal-Gießkern bedingt ohne wesentliche Bedeutung sind, ist mit der Erfindung in einer mehrzylindrigen Brennkraftmaschine ein relativ hohes und über die Zylinder vergleichmäßigtes Drallniveau erzielt.

Für ein derartiges Drallniveau von erheblichem Einfluß ist die Richtung der Drallkanäle relativ zur Zylinderachse sowie die Lage ihrer Einlaßöffnungen zur Zylinderwandung. Um die gewünschte Richtung und die Lage der Drallkanäle bei der mechanischen Bearbeitung des gegossenen Zylinderkopfes mit mehreren Einlaßkanälen sicherzustellen, sind im ersten und letzten Einlaßkanal und den damit verbundenen Tangentialkanälen der Ausrichtung des Zylinderkopfes in Motorquer- und Motorlängs-Richtung dienende Erstaufnahmeflächen angeordnet. Derartige Erstaufnahmeflächen sind per se für einen Zylinderkopf einer Diesel-Brennkraftmaschine in der DE-B 1 041 323 gezeigt und die damit verbundene Handhabung zur vorteilhaften Ausrichtung des Zylinderkopfes beschrieben.

Mit der Erfindung ist es insbesondere bei Brennkraftmaschinen mit kleinen Zylinderbohrungen vorteilhaft möglich, eine platzsparende Einlaßkanalausführung in der Kombination von Spiral- und Tangentialkanal zur optimalen Drallerzeugung zu verwirklichen. Insbesondere bei V-Motoren wie auch bei Reihenmotoren ist damit eine Verbesserung bezüglich Bauraum, Gewicht und Kosten im Zusammenhang mit der Drallerzeugung erreicht. Weiter kann damit auch eine konstruktiv günstige Ausführung des Ventiltriebes durch eine vorzugsweise parallele Ventilanordnung realisiert werden.

Gießtechnisch hat die erfindungsgemäße Zwillingskanalausführung Vorteile durch den Entfall eines Kernpaketes und durch den in sich sehr steifen Kanal-Gießkern. Im Hinblick auf die stark emissionsbeeinflussenden Drallstreuungen in einer Serienfertigung infolge Kanalverschiebungen während des Gießvorganges sind steife Kanal-Gießkerne vorteilhaft.

Die Erfindung ist anhand eines in der Zeichnung dargestellten Ausführungsbeispiels beschrieben.

Es zeigt
- Figur 1: in perspektivischer Ansicht einen über einem Zylinder einer Brennkraftmaschine angedeuteten Zylinderkopf mit der erfindungsgemäßen Kanalgestaltung, in
- Figur 2: die Kanalgestaltung in Draufsicht des angedeuteten Zylinderkopfes und in
- Figur 3: die Kanalgestaltung in Seitenansicht in Richtung der Maschinenlängsebene.

Eine lediglich abschnittsweise angedeutete Diesel-Brennkraftmaschine 1 umfaßt in einem Zylinderkopf 2 je Zylinder 3 auf einer Seite der Maschinenlängsebene 4 angeordnete, ventilgesteuerte Einlaßöffnungen 5 und 6, die mit Drallkanälen 7 und 8 in Verbindung stehen. Die Einlaßöffnung 5 steht mit dem als Tangential- oder Schrägkanal angeordneten Drallkanal 7 und die Einlaßöffnung 6 mit dem als Spiralkanal ausgebildeten Drallkanal 8 in Verbindung. Die durch den Tangentialkanal 7 im Zylinder 3 initiierte Drehung - Pfeil A - der Ladung ist durch den in Draufsicht rechtsdrehenden Spiralkanal 8 bewirkten, gleichgerichteten Drall unterstützt bzw. verstärkt.

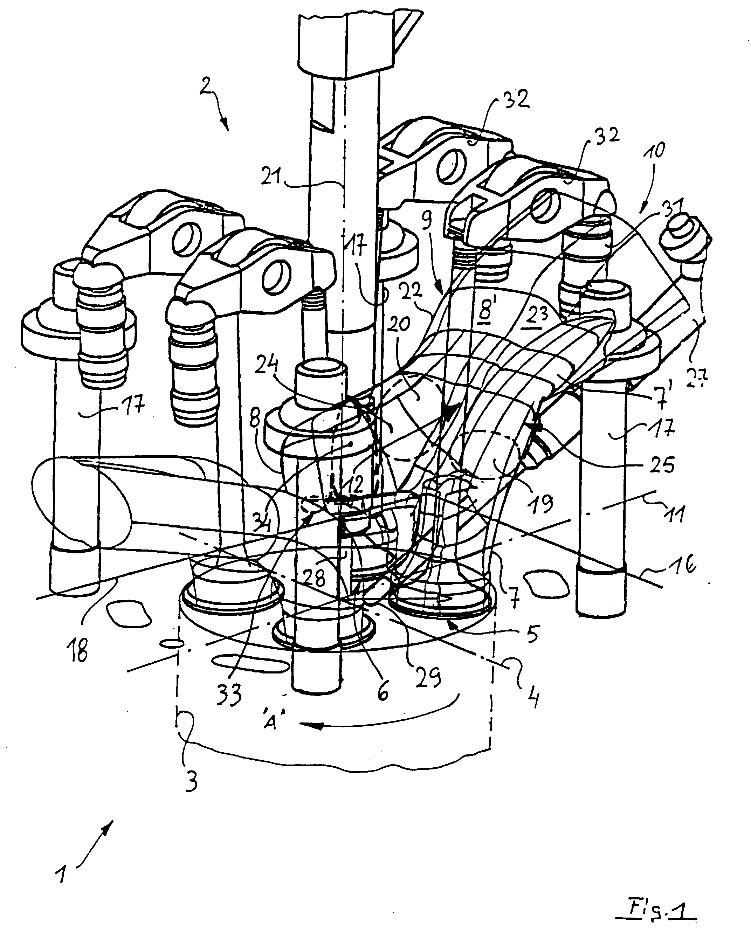

Wie aus den Figuren 1 bis 3 ersichtlich, sind der Tangentialkanal 7 und der Spiralkanal 8 Teilkanäle eines gemeinsamen Einlaßkanals 9, dessen Einlaßmündung 10 im Zylinderkopf 2 von einer die Maschinenlängsebene 4 querenden Zylindermittenebene 11 derart beabstandet angeordnet ist, daß der Einlaßkanal 9 stromauf einer im Bereich zwischen den Einlaßöffnungen 5, 6 angeordneten Gabelung 12 der Teilkanäle 7, 8 einen zur Maschinenlängsebene 4 schräg verlaufenden Abschnitt 13 aufweist. In diesem Einlaßkanal-Abschnitt 13 ist durch die Hauptströmung der Ladung eine Mittellinie 14 festgelegt, die zur Kanalachse 15 des, bezogen auf die rotierende Zylinderladung - Pfeil A -, vorderen Tangentialkanals 7 im wesentlichen parallel verläuft.

Weiter ist der Einlaßkanal-Abschnitt 13 im Bereich der Gabelung 12 durch eine solche mittlere Steigung des relativ hinteren Spiralkanals 8 vom Zylinderkopfboden 16 bzw. seiner Dichffläche beabstandet, daß der als vorderer Drallkanal dienende Tangentialkanal 7 stromab der Gabelung 12 über einen umfänglich geschlossenen Querschnitt zur Ausbildung einer gerichteten Strömung an die Einlaßöffnung 5 anschließt. Vorzugsweise ist die Steigung des Spiralkanals 8 so gewählt, daß der Tangentialkanal 7 unter einem bevorzugten Winkel von ca. 40° zum Zylinderkopfboden 16 schräg ansteigend dem Einlaufbereich des Spiralkanals 8 benachbart an den Einlaßkanal-Abschnitt 13 anschließt.

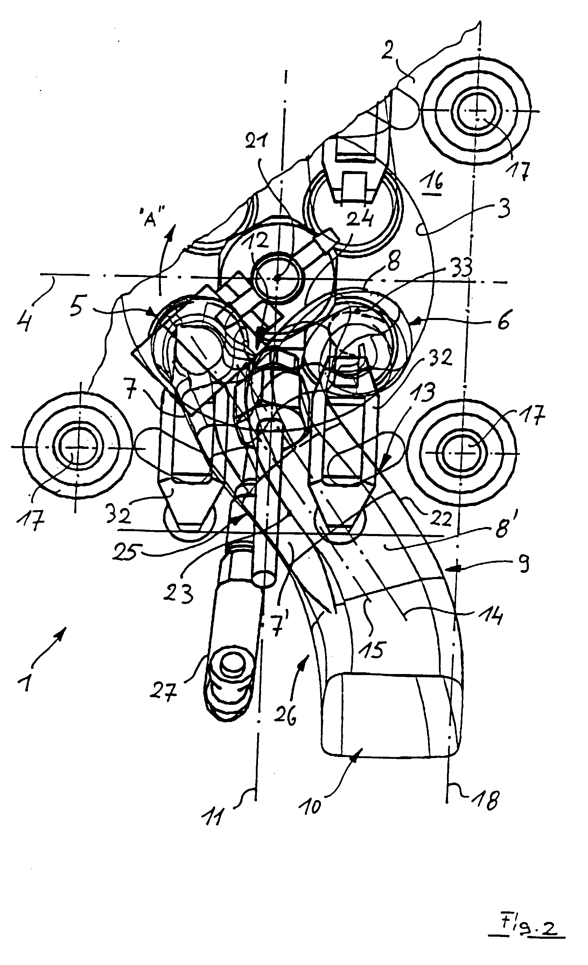

Wie aus Figur 2 ersichtlich, ist die Einlaßmündung 10 des Einlaßkanals 9 von der Zylindermittenebene 11 beabstandet im Bereich einer durch frei gewählt vorgesehene Zylinderkopfschrauben 17 bestimmten Querebene 18 angeordnet. Dies ermöglicht in Verbindung mit der zwischen den Einlaßöffnungen 5, 6 zylindermittennah angeordneten Gabelung 12 eine Ausgestaltung des Einlaßkanals 9 in einer beispielsweise zur Strömungsberuhigung günstigen Länge, die durch einen räumlichen Verlauf des für beide Drallkanäle 7, 8 gemeinsamen Einlaßkanals 9 zur Dralloptimierung gesteigert werden kann.

Zur Steigerung der Einströmgeschwindigkeit geht der im wesentlichen rechteckige, verrundete Querschnitt der Einlaßmündung 10 mit einer im Einlaßkanal-Abschnitt 13 einsetzenden Auffächerung in die Teil- bzw. Drallkanäle 7, 8 im Bereich der Gabelung 12 in als Rundovale 19, 20 gestaltete, flächenreduzierte Teilquerschnitte über. Zur entsprechenden kanalangepaßten Ladungsaufteilung auf den Tangentialkanal 7 und den Spiralkanal 8 weist letzterer ein im wesentlichen vertikal in Richtung der Zylinderachse 21 gerichtetes Rundoval 20 auf, zu dem das Rundoval 19 des Tangentialkanals 7 mit seiner Hauptachse quer gerichtet ist, Figur 1.

Bezüglich der vorerwähnten Querschnittsreduzierung weist der mit dem Spiralkanal 8 stromauf in Verbindung stehende Fächerkanal 8' im Einlaßkanal-Abschnitt 13 bis zur Gabelung 12 bei mäßiger Verringerung der Kanalhöhe eine zur schraubenseitigen, hinteren Seitenbegrenzung 22 unter einem spitzen Winkel - in Draufsicht der Figur 2 gesehen - gerichtet verlaufende vordere tangentialkanalseitige Seitenbegrenzung 23 auf, die an eine äußere, das Rundoval 20 teilweise begrenzende Spiralwandung 24 des Spiralkanals 8 anschließt. Wie aus den Figuren 1 bis 3 weiter hervorgeht, weist die tangentialkanalseitige Seitenbegrenzung 23 eine auswärts gerichtete, rippenartig gestaltete und kanalbodennah angeordnete Ausbuchtung 25 als Fächerkanal 7' zum Tangentialkanal 7 auf.

Die vorbeschriebenen Gestaltungen der Fächerkanäle 7' und 8' ergeben in Verbindung mit der weiter vorne beschriebenen Zuordnung des flächenkleineren Rundovals 19 des Tangentialkanals 7 zu dem wegen Strömungswiderstände flächengrößeren Rundovals 20 des Spiralkanals 8 eine aus Figur 1 erkennbare gegenseitige Zuordnung der Rundovale 19, 20 mit einer im unteren Teil des vertikalen Rundovals 20 quer gerichteten Rundovals 19. In weiterer Verbindung damit, daß die Mittellinie 14 des Einlaßkanals 9 in der Verlängerung die äußere Spiralwandung 24 stromab der anschließenden vorderen Seitenbegrenzung 23 schneidet, ist mit dieser erfindungsgemäßen Kanalgestaltung eine für eine Dralloptimierung vorteilhafte kanalgerechte Ladungsaufteilung erzielt. Hierbei vorteilhaft ist ferner der stetige Übergang des Fächerkanals 7' in den Tangentialkanal 7.

Die beiden Drallkanäle 7 und 8 sind in ihren durch die Rundovale 19 und 20 festgelegten Querschnitten so gewählt, daß beide Drallkanäle 7 und 8 gleiche Drallwerte bzw. Drehimpulse der Ladung im Zylinder 3 bewirken. Hierfür ist zur Stützung der Ladungsströmung im Spiralkanal 8 vorteilhaft vorgesehen, daß dieser stromab der Gabelung 12 vom rundovalen Querschnitt 20 in einen hochovalen Querschnitt 34 übergeht mit in Spiralumfangsrichtung zunächst zunehmend nach oben außen geneigter äußerer Spiralwandung 24, wobei diesem Abschnitt der Spiralwandung 24 im wesentlichen ein durch eine - in Draufsicht gesehene - spiralförmige Verschneidungskante gebildeter Kanalbodenabschnitt 33 zugeordnet ist, der mit der Spiralwandung 24 eine Lufthalterinne (Drallkante) bildet. Der Vorteil dieser Ausgestaltung ist die Verhinderung eines vorzeitigen Abfließens der Luft aus dem Spiralkanal 8 in Richtung Zylindermitte mit der Folge einer ungenügenden Drallausbildung.

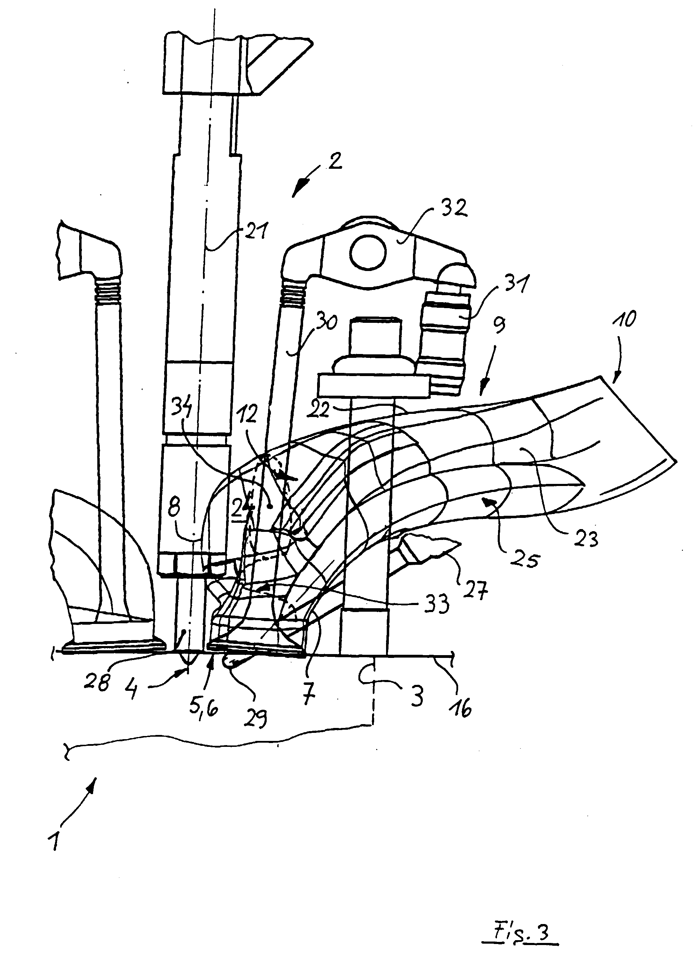

Zur Erzielung einer maximalen Länge des Einlaßkanals 9 in einem Zylinderkopf 2 üblicher Baubreite bei einem Kanalverlauf zwischen in Richtung der Maschinenlängsebene 4 beabstandeten Zylinderkopfschrauben 17 ist der die Fächerkanäle 7', 8' umfassende und zur Maschinenlängsebene 4 in Draufsicht schräg verlaufende Einlaßkanal-Abschnitt 13 zusätzlich relativ zum Zylinderkopfboden 16 in Richtung der Einlaßmündung 10 ansteigend gestaltet und mit der am Zylinderkopf 2 seitwärts nach oben gerichteten Einlaßmündung 10 über einen Krümmungsabschnitt 26 - Figur 3 - verbunden. Vorzugsweise ist diese Einlaßmündung 10 in einem kurzen, am Zylinderkopf 2 angeordneten, nicht gezeigten Anschlußstutzen beispielsweise zu einem Luftsammler ausgebildet.

Mit diesem räumlichen Verlauf des Einlaßkanals 9 ergibt sich in Verbindung mit der durch die gewählte Steigung des Spiralkanals 8 festgelegten Höhenlage der Gabelung 12 von Tangentialkanal 7 und Spiralkanal 8 in vorteilhafter Weise im Bereich der die Zylindermittenebene 11 unterhalb des Einlaßkanals 9 im Zylinderkopf 2 ein leicht zugänglicher Einbauraum. Dieser weist außenseitig des Zylinderkopfes 2 eine solche Höhe auf, daß eine den Einlaßkanal 9 unterquerende Glühvorrichtung 27 mindestens unter dem Minimalwinkel von ca. 30° zum Zylinderkopfboden 16 anordbar ist mit einer zwischen den Einlaßöffnungen 5, 6 einer Einspritzdüse 28 benachbart angeordneten Glühkerze 29.

Die erfindungsgemäße Kanalgestaltung ermöglicht ferner von der Maschinenlängsebene 4 parallel unter gleichem Abstand angeordnete Einlaßöffnungen 5, 6, deren Hubventile 30 über durch hydraulische Ventilspielausgleichselemente 31 abgestützte Rollenschlepphebel 32 mittels einer gemeinsamen, nicht dargestellten Steuerwelle betätigt sind.

Zur gesteuerten Änderung des Drallniveaus kann im Einlaßkanal 9 eine verstellbar angeordnete, nicht gezeigte Klappe angeordnet sein.

Weiter ist anstelle des Tangentialkanals 7 auch ein weiterer Spiralkanal denkbar.

Bekanntlich ist für ein hohes Drallniveau von erheblichem Einfluß die Richtung der Drallkanäle 7, 8 relativ zur Zylinderachse 21 sowie deren Lage bzw. deren Einlaßöffnungen 5, 6 relativ zur Wandung des Zylinders 3. Um die gewünschte Richtung und Lage der Drallkanäle 7, 8 bei der mechanischen Bearbeitung des gegossenen Zylinderkopfes 2 mit mehreren Einlaßkanälen 9 und zugeordneten Drallkanälen 7, 8 sicherzustellen, sind im ersten und letzten Einlaßkanal 9 (nicht gezeigt) und den damit verbundenen Tangentialkanälen 7 der Ausrichtung des Zylinderkopfes in Maschinenquer- und Maschinenlängs-Richtung dienende Erstaufnahmeflächen angeordnet. Diese mit dem Gießkern des Einlaßkanals 9 im gegossenen Zylinderkopf 2 ausgeformten Erstaufnahmeflächen können z.B. umfassen eine im Umfangsbereich der vorderen Einlaßöffnung 5 in Maschinenquerrichtung weisende Aufnahmefläche und je eine in Maschinenlängsrichtung weisende Aufnahmefläche im Strömungsschatten eines Ventilführungsdomes und nahe der Einlaßmündung 10 stromab an der Deckwand des Einlaßkanals 9. Nähere Einzelheiten zu diesem Arbeitsverfahren der Zylinderkopfausrichtung mit Erstaufnahmeflächen beschreibt die bereits erwähnte DE-B 1 041 323.

Schließlich kann die Erfindung auch bei einer als Otto-Magermotor mit Direkteinspritzung gestalteten Brennkraftmaschine Verwendung finden.

## Patentansprüche

1. Brennkraftmaschine mit innerer Gemischbildung, insbesondere Dieselmotor,
- mit je Zylinder (3) zwei auf einer Seite der Maschinenlängsebene (4) angeordneten, ventilgesteuerten Einlaßöffnungen (5, 6), wobei
- die relativ zu einer rotierenden Zylinderladung (Pfeil A) vordere Einlaßöffnung (5) mit einem ersten Drallkanal (7) und
- die hintere Einlaßöffnung (6) mit einem die Ladungsbewegung unterstützenden, als Spiralkanal gestalteten zweiten Drallkanal (8) in Verbindung steht, wobei
- beide Drallkanäle (7, 8) Teilkanäle eines gemeinsamen Einlaßkanals (9) sind mit einer seitlich im Zylinderkopf (2) vorgesehenen Einlaßmündung (10) mit einem im wesentlichen rechteckigen, verrundeten Querschnitt,
dadurch gekennzeichnet,
- daß die Einlaßmündung (10) von einer die Maschinenlängsebene (4) querenden Zylindermittenebene (11) in Richtung einer durch spiralkanalseitige Zylinderkopfschrauben (17) bestimmten Querebene (18) versetzt angeordnet ist, wobei
- der Einlaßkanal (9) - in Draufsicht gesehen - stromauf einer im Bereich zwischen den Einlaßöffnungen (5, 6) angeordneten Gabelung (12) der Teil- bzw. Drallkanäle (7, 8) einen zur Maschinenlängsebene (4) schräg verlaufenden Abschnitt (13) aufweist, der
- mit einsetzender Auffächerung (Fächerkanäle 7', 8') in die Teil- bzw. Drallkanäle (7, 8) mit flächenreduzierten Teilquerschnitten bis zur Gabelung (12) bei mäßiger Verringerung der Kanalhöhe eine zu der der Querebene (18) zugewandten Seitenbegrenzung (22) unter einem spitzen Winkel - in Draufsicht gesehen - gerichtet verlaufende, dem ersten Drallkanal (7) zugewandte Seitenbegrenzung (23) aufweist, die
- in eine äußere Spiralwandung (24) des Spiralkanals (8) übergeht, und
- die eine auswärts gerichtete, kanalbodennahe Ausbuchtung (25) als Fächerkanal (7') zu einem den ersten Drallkanal bildenden Tangentialkanal (7) aufweist, dessen
- Kanalachse (15) zumindest im einlaßmündungsseitigen Anfangsbereich im wesentlichen parallel zu der durch die Hauptströmung der Ladung im schräg verlaufenden Abschnitt (13) des Einlaßkanals (9) festgelegten Mittellinie (14) ist.

2. Brennkraftmaschine nach Anspruch 1, dadurch gekennzeichnet,
- daß der Einlaßkanal-Abschnitt (13) im Bereich der Gabelung (12) durch eine solche mittlere Steigung des Spiralkanals (8) vom Zylinderkopfboden (16) beabstandet ist, daß
- einerseits der Tangentialkanal (7) stromab der Gabelung (12) über einen umfänglich geschlossenen Querschnitt an die vordere Einlaßöffnung (5) anschließt, und
- daß andererseits der Tangentialkanal (7) unter einem Winkel von 30° bis 50° zum Zylinderkopfboden (16) schräg ansteigend dem Einlaufbereich des Spiralkanals (8) benachbart mit dem Einlaßkanal-Abschnitt (13) verbunden ist.

3. Brennkraftmaschine nach Anspruch 1 und 2, dadurch gekennzeichnet,
- daß der Einlaßkanal-Abschnitt (13) mit einsetzender Auffächerung in die Fächerkanäle (7', 8') im Bereich der Gabelung (12) in rundoval (19, 20) gestaltete, flächenreduzierte Teilquerschnitte übergeht, wobei
- das Rundoval (20) des Spiralkanals (8) mit seiner Hauptachse im wesentlichen vertikal in Richtung der Zylinderachse (21) und das Rundoval (19) des Tangentialkanals (7) dazu im wesentlichen quer bzw. horizontal gerichtet angeordnet ist.

4. Brennkraftmaschine nach Anspruch 3, dadurch gekennzeichnet,
- daß der die Fächerkanäle (7', 8' ) umfassende Einlaßkanal-Abschnitt (13) relativ zum Zylinderkopfboden (16) in Richtung Einlaßmündung (10) ansteigend gestaltet ist, und
- mit einer am Zylinderkopf (2) seitwärts nach oben gerichteten Einlaßmündung (10) über einen Krümmungsabschnitt (26) in Verbindung steht.

5. Brennkraftmaschine nach den Ansprüchen 1 bis 4, dadurch gekennzeichnet, daß der Zylinderkopf (2) im Einlaßkanal (9) nahe seiner Einlaßmündung (10) und im angeschlossenen Tangentialkanal (7) im Strömungsschatten einer Ventilführung sowie im Umfangsbereich der zugehörigen Einlaßöffnung (5) jeweils eine Erstaufnahmefläche aufweist.

6. Brennkraftmaschine nach den Ansprüchen 1 bis 5, dadurch gekennzeichnet, daß im Zylinderkopf (2) zum Zylinderkopfboden (16) geneigt eine im Bereich der Zylindermittenebene (11) den Einlaßkanal (9) unterquerende Glühvorrichtung (27) angeordnet ist mit einer zwischen den Einlaßöffnungen (5, 6) einer Einspritzdüse (28) benachbart angeordneten Glühkerze (29).

7. Brennkraftmaschine nach den Ansprüchen 1 bis 6, dadurch gekennzeichnet, daß die Einlaßöffnungen (5, 6) mittels von einer gemeinsamen Steuerwelle betätigte Hubventile gesteuert sind.

8. Brennkraftmaschine nach den Ansprüchen 1 bis 7, dadurch gekennzeichnet, daß im Einlaßkanal (9) eine verstellbare Klappe zur Änderung des Drallniveaus angeordnet ist.

9. Brennkraftmaschine nach einem oder mehreren der Ansprüche 1 bis 8, dadurch gekennzeichnet, daß die beiden Drallkanäle (7, 8) in ihren Querschnitten so gewählt sind, daß beide Drallkanäle (7, 8) gleiche Drallwerte bzw. Drehimpulse der Ladung im Zylinder (3) bewirken.

10. Brennkraftmaschine nach einem der Ansprüche 1 bis 9, dadurch gekennzeichnet,
- daß der Spiralkanal (8) stromab der Gabelung (12) vom rundovalen Querschnitt (20) in einen hochovalen Querschnitt (34) übergeht mit in Spiralumfangsrichtung zunächst zunehmend nach oben außen geneigter und gegen Spiralende abnehmend nach oben außen geneigter äußerer Sprialwandung (24), wobei
- diesem Abschnitt der Spiralwandung (24) im wesentlichen ein durch eine - in Draufsicht gesehene - spiralförmige Verschneidungskante gebildeter Kanalbodenabschnitt (33) zugeordnet ist, der
- mit der Spiralwandung (24) eine Lufthalterinne (Drallkante) bildet.

11. Brennkraftmaschine nach einem oder mehreren der Ansprüche 1 bis 10, gekennzeichnet durch die Verwendung als Otto-Magermotor mit Direkteinspritzung.

## Claims

1. An internal combustion engine with internal mixture formation, especially a diesel engine,
- comprising two inlet openings (5, 6) per cylinder (3), valvecontrolled and disposed on one side of the longitudinal plane (4) through the engine, wherein
- the front inlet opening (5) relative to a rotating cylinder charge (arrow A) is connected to a first swirl duct (7) and
- the rear inlet opening (6) is connected to a second swirl duct (8) in the form of a spiral duct and promoting the movement of charge, wherein
- both swirl ducts (7, 8) are component ducts of a common inlet duct (9) and have an inlet orifice (10) with a substantially rectangular rounded cross-section and disposed laterally in the cylinder head (2),
characterised in that
- the inlet mouth (10) is offset from a central cylinder plane (11) extending transversely across the longitudinal engine plane (4), in the direction of a transverse plane (18) defined by cylinder-head screws (17) on the same side as the spiral duct, wherein
- the inlet duct (9), seen in plan view, has a portion (13) extending at an angle to the longitudinal engine plane (4) upstream of a fork (12) between the component ducts or swirl ducts (7, 8) situated in the region between the inlet openings (5, 6), and
- the portion (13) fans out (fan-shaped ducts 7', 8') into the component or swirl ducts (7, 8) with reduced-area cross-sections up to the fork (12) and with moderate reduction in the duct height, and has a lateral boundary (23) facing the first swirl duct (7) and extending at an acute angle (seen in plan view) to the lateral boundary (22) facing the transverse plane (18), and
- the lateral boundary (23) merges into an outer spiral wall (24) of the spiral duct (8) and
- has an outwardly directed bulge (25) near the duct bottom and in the form of a fan-shaped duct (7') to a tangential duct (7) which constitutes the first swirl duct and whose
- axis (15), at least in the initial region in the same side as the inlet orifice, is substantially parallel to the centre line (14) defined by the main flow of the charge in the sloping portion (13) of the inlet duct (9).

2. An engine according to claim 1, characterised in that
- the inlet duct cross-section (13) in the neighbourhood of the fork (12) is separated from the cylinder head bottom (16) by an average pitch of the spiral duct (8) such that
- on the one hand the tangential duct (7) downstream of the fork (12) adjoins the front inlet opening (5) via a peripherally closed cross-section and
- on the other hand the tangential duct (7) is connected to the inlet region of the spiral duct (8) near the inlet duct portion (13) at an angle of 30° to 50° up to the cylinder head bottom (16).

3. An engine according to claims 1 and 2, characterised in that
- the inlet duct portion (13), where it fans out into the fan-shaped ducts (7', 8') in the neighbourhood of the fork (12), merges into round oval (19, 20) reduced-area component cross-sections wherein
- the main axis of the round oval (20) of the spiral duct (8) is substantially vertical in the direction of the cylinder axis (21) and the round oval (19) of the tangential duct (7) is disposed substantially transversely thereto or horizontally.

4. An engine according to claim 3, characterised in that
- the inlet-duct portion (13) comprising the fan-shaped ducts (7', 8') rises relative to the cylinder head bottom (16) in the direction of the inlet orifice (10), and
- is connected via a bent portion (26) to an inlet orifice (10) directed sideways and upwards on the cylinder head (2).

5. An engine according to claims 1 to 4, characterised in that the cylinder head (2) has a respective first receiving surface in the inlet duct (9) near its inlet orifice (10) and in the connected tangential duct (7) in the turbulent region of a valve guide and in the peripheral region of the associated inlet opening (5).

6. An engine according to claims 1 to 5, characterised in that an ignition device (27) extending transversely under the inlet duct (9) in the region of the central cylinder plane (11) is disposed in the cylinder head (2) at an angle to the cylinder head bottom (16) and contains a spark plug (29) which adjoins and is disposed between the inlet openings (5, 6) of an injection nozzle (28).

7. An engine according to claims 1 to 6, characterised in that the inlet openings (5, 6) are controlled by gate valves actuated by a common control valve.

8. An engine according to claims 1 to 7, characterised in that an adjustable flap for altering the swirl level is disposed in the inlet duct (9).

9. An engine according to one or more of claims 1 to 8, characterised in that the two swirl ducts (7, 8) are given cross-sections such that both swirl ducts (7, 8) produce the same swirl or angular momentum in the charge in the cylinder (3).

10. An engine according to any of claims 1 to 9, characterised in that
- downstream of the fork (12) the spiral duct (8) changes from a round oval cross-section (20) to a vertical oval cross-section (34) with an outer spiral wall (24) which initially is increasingly inclined upwards and outwards in the peripheral direction of the spiral whereas towards the end of the spiral it is decreasingly inclined upwards and outwards, wherein
- this portion of the spiral wall (24) is substantially associated with a duct bottom portion (33) formed (as seen in plan view) by a spiral cutting edge, and
- the portion (33) co-operates with the spiral wall (24) to form an air-retaining channel (swirl edge).

11. An engine according to one or more of claims 1 to 10, characterised by use as a lean-mix spark-ignition engine with direct injection.

## Revendications

1. Moteur à combustion interne à formation interne du mélange, notamment moteur diesel, comprenant :
- par cylindre (3), deux orifices d'admission (5, 6) commandés par soupapes, prévus d'un côté du plan longitudinal (4) du moteur,
- l'orifice d'admission (5) avant par rapport à l'alimentation rotative du cylindre (flèche A), est relié à un premier canal d'écoulement rotatif (7), et
- l'orifice d'admission arrière (6) est relié à un second canal d'écoulement rotatif (8) en forme de canal en spirale soutenant le mouvement de l'alimentation,
- les deux canaux à écoulement rotatif (7, 8) sont des canaux partiels d'un canal d'admission commun (9), avec un orifice d'admission (10) prévu latéralement dans la culasse (2), à sections essentiellement rectangulaires arrondies,
caractérisé en ce que
- l'orifice d'admission (10) est décalé par rapport à un plan central de cylindre (11) transversal à l'axe longitudinal (4) du moteur, en direction d'un plan transversal (18) déterminé par les vis (17) de la culasse du côté du canal en spirale,
- le canal d'admission 9, en vue de dessus, comporte en amont d'une bifurcation (12) prévue dans la zone comprise entre les orifices d'admission (5, 6) des canaux à écoulement partiel ou de rotation (7, 8), un segment (13) dirigé en biais par rapport au plan longitudinal (4) du moteur,
- ce segment ayant une extension en éventail (canaux en éventail 7', 8') dans les canaux à écoulement partiel ou circulaire (7, 8), avec des sections partielles de surface réduite jusqu'à la bifurcation (12) pour une réduction moyenne de la hauteur de canal, présente une limitation latérale (22) tournée vers le plan transversal (18) en faisant un angle aigu (en vue de dessus), cette limitation latérale (23) étant dirigée vers le premier canal à écoulement rotatif (7),
- cette limitation latérale rejoint une paroi en spirale extérieure (24) du canal en spirale (8), et
- la paroi en spirale présente une cavité (25) proche du fond du canal, dirigée vers l'extérieur, formant un canal en éventail (7') vers le canal tangentiel (7) formant le premier canal à écoulement rotatif,
- l'axe (15) du canal tangentiel, au moins dans la zone initiale du côté de l'orifice d'admission, est essentiellement parallèle au segment (13) du canal d'admission (9), incliné par rapport à la direction d'écoulement principal de l'alimentation.

2. Moteur à combustion interne selon la revendication 1,
caractérisé en ce que
- le segment (13) du canal d'admission au niveau de la bifurcation (12) est écarté du fond de la culasse (16) par une pente moyenne du canal en spirale (8), de sorte que,
- d'une part, le canal tangentiel (7), en aval de la bifurcation (12) rejoint par une section périphérique fermée, l'orifice d'admission avant (5), et
- d'autre part, le canal tangentiel (7) est relié, suivant un angle compris entre 30° et 50° par rapport au fond de la culasse (16) et suivant une pente inclinée, au voisinage de la zone d'entrée du canal en spirale (8), avec le segment de canal d'entrée (13).

3. Moteur à combustion interne selon la revendication 1 ou 2,
caractérisé en ce que
- le segment de canal d'admission (13) rejoint, avec son développement en éventail par les canaux en éventail (7', 8') au niveau de la bifurcation (12), des segments partiels de surface réduite, de forme ovale ou ronde (19, 20),
- l'ovale rond (20) du canal en spirale (8) étant prévu dans la direction de l'axe de cylindre (21) et l'ovale rond (19) du canal tangentiel (7) étant aligné essentiellement transversalement ou horizontalement par rapport à celui-ci.

4. Moteur à combustion interne selon la revendication 3,
caractérisé en ce que
- le segment de canal d'admission (13) comprenant les canaux en éventail (7', 8') est de forme montante par rapport au fond de culasse (16), en direction de l'orifice d'admission (10), et
- il communique par un segment de coude (26) avec un orifice d'admission (10) dirigé latéralement vers le haut sur la culasse (2).

5. Moteur à combustion interne selon l'une des revendications 1 à 4,
caractérisé en ce que
la culasse (2) comporte dans le canal d'admission (9), à proximité de son orifice d'admission (10), et dans le canal tangentiel (7) adjacent dans l'ombre de l'écoulement, un moyen de guidage de soupape et dans la zone périphérique de l'orifice d'admission respectif (5), chaque fois une surface de première réception.

6. Moteur à combustion interne selon l'une des revendications 1 à 5,
caractérisé par
un dispositif à incandescence (27) prévu dans la culasse (2), incliné par rapport au fond (16) de la culasse, et coupant, le canal d'admission (9) dans la zone du plan médian (11) du cylindre, avec une bougie à incandescence (29) prévue entre les orifices d'admission (5, 6) au voisinage d'un injecteur (28).

7. Moteur à combustion interne selon l'une des revendications 1 à 6,
caractérisé en ce que
les orifices d'admission (5, 6) sont commandés par des soupapes commandées par un arbre commun.

8. Moteur à combustion interne selon l'une des revendications 1 à 7,
caractérisé par
un volet réglable équipant le canal d'admission (9) pour modifier le niveau d'écoulement rotatif.

9. Moteur à combustion interne selon l'une des revendications 1 à 8,
caractérisé en ce que
les deux canaux à écoulement circulaire (7, 8) ont une section choisie pour que ces deux canaux (7, 8) donnent les mêmes écoulements circulaires ou impulsions de rotation à la charge, dans le cylindre (3).

10. Moteur à combustion interne selon l'une des revendications 1 à 9,
caractérisé en ce que
- en aval de la bifurcation (12) le canal en spirale (8) transforme sa section ovale ronde (20) en une section ovale (34) debout, qui augmente tout d'abord dans la direction périphérique en spirale, en étant inclinée vers le haut et vers l'extérieur, puis, vers l'extrémité de la spirale, sa paroi extérieure (24) diminue d'inclinaison,
- à ce segment de la paroi en spirale (24) est associée essentiellement une arête de coupe en spirale (en vue de dessus) avec un segment de fond de canal (33) qui constitue une goulotte d'air (arête de circulation rotative) avec la paroi en spirale (24).

11. Moteur à combustion interne selon l'une ou plusieurs des revendications 1 à 10,
caractérisé par
son application à un moteur à essence à mélange pauvre et injection directe.
